# FASCICULE DE BREVET EUROPEEN

(11) **EP 2 803 646 B1**
(45) Date de publication et mention de la délivrance du brevet: **16.05.2018**
(21) Numéro de dépôt: 14168683.2
(22) Date de dépôt: 16.05.2014
(51) Int. Cl.: C03C 17/34, C03C 17/36

(54) **Procédé de depot de revêtements sur un substrat et de production d'un vitrage**
Verfahren zur Beschichtung eines Substrats und zur Herstellung eines Fenster
Process for coating a substrate and for manufacturing a window

(30) Priorité: 17.05.2013 FR 1354480
(43) Date de publication de la demande: 19.11.2014
(73) Titulaire: Saint-Gobain Glass France, 92400 Courbevoie (FR)
(72) Inventeur: REUTLER, Pascal, 75019 Paris (FR); EL HITTI, Georges, 75013 Paris (FR)
(74) Mandataire: Saint-Gobain Recherche

(56) Documents cités:
- WO-A2-03/065081
- DE-A1-102005 014 031
- FR-A1- 2 879 188
- FR-A1- 2 973 023
- US-A1- 2002 176 988
- US-A1- 2003 118 860
- US-A1- 2006 035 021
- US-A1- 2007 231 553

## Description

L'invention concerne un procédé de dépôt de revêtements de préférence constitués par des empilements de couches minces sur un substrat transparent, tout particulièrement en verre, destiné à lui conférer des propriétés spécifiques, notamment une réflexion lumineuse très basse, de l'ordre de 1 à 2 % ou même inférieure, ou encore des propriétés de contrôle solaire telles qu'une forte réflexion des Infrarouges thermiques (propriétés dites de basse émissivité) ou encore de contrôle solaire (limitation du flux énergétique traversant le substrat), ou encore des propriétés d'hydrophobie/hydrophilie, sans que cette liste soit cependant exhaustive et restrictive.

De tels substrats sont destinés à constituer ou à être incorporé dans un vitrage présentant au moins une des fonctionnalités précédemment décrites.

Par exemple, et sans que cela soit restrictif, un revêtement antireflet est usuellement constitué par un empilement de couches minces interférentielles, en général une alternance de couches à base de matériau diélectrique à forts et faibles indices de réfraction, chaque couche présentant une épaisseur inférieure à 1 micromètre et le plus souvent comprise entre quelques nanomètres et quelques dizaines de nanomètres. Incorporé à un support transparent, le plus souvent verrier, un tel revêtement a pour principale fonction d'en diminuer la réflexion lumineuse et d'en augmenter la transmission lumineuse. Un substrat ainsi revêtu voit donc son ratio lumière transmise/lumière réfléchie augmenter, ce qui améliore la visibilité des objets placés derrière lui. Pour obtenir un effet antireflet maximal, il est nécessaire de munir les deux faces du substrat de ce type de revêtement.

Il y a beaucoup d'applications à ce type de produit : il peut servir de ou être incorporé à un vitrage dans le bâtiment, ou servir de vitrage dans les meubles de vente, par exemple en tant que présentoir de magasin et verre bombé architectural, afin de mieux distinguer ce qui se trouve dans la vitrine, même quand l'éclairage intérieur est faible par rapport à l'éclairage extérieur. Il peut aussi servir de verre de comptoir. Des exemples de tels vitrages sont notamment commercialisés par de la société déposante sous la référence Vision-lite®. Selon une application, il est également possible d'utiliser de tels substrats dans le domaine des vitrages automobiles. Cela permet d'éviter certaines réflexions parasites jugées inesthétiques. En outre ces réflexions peuvent perturber le conducteur, notamment lors d'une conduite de nuit, en particulier si le véhicule est éclairé de l'intérieur. Une autre application possible réside dans les vitrages pour porte vitrée de réfrigérateur ou congélateur notamment utilisés dans les magasins alimentaires.

Selon un autre exemple d'application nécessitant l'obtention de substrat verrier revêtu sur ses deux faces d'empilements de nature différente, on commercialise aujourd'hui des doubles vitrages dans le domaine de l'isolation énergétique des bâtiments qui incorporent comme feuille intérieure un tel substrat : celui-ci est muni d'un premier empilement de couches sur sa face tournée vers la lame de gaz du double vitrage, dont au moins une couche de métal précieux, en particulier d'argent, permettant à cette face de conférer à la structure des propriétés de basse émissivité. Sur l'autre face (tournée vers l'intérieur du bâtiment) est déposé un empilement de contrôle solaire comprenant un oxyde conducteur du type SnO₂ :F ou encore ITO, permettant un meilleur contrôle du flux solaire entrant par cette face du double vitrage, en plus de la fonction basse émissivité décrite précédemment.

Bien entendu, la présente invention n'est pas limitée aux deux exemples d'application précédents mais s'adresse de manière générale à tout procédé ou produit pour lequel il est nécessaire de déposer un empilement fonctionnel sur chaque face d'au moins un substrat qui constitue ou qui est incorporé dans un vitrage.

Pour l'obtention de vitrages incorporant un substrat muni d'un empilement de couches sur une seule face un procédé d'obtention classique comprend le dépôt sur une première face du substrat verrier, déposé à plat sur des moyens de convoyage, d'un premier empilement de couches. Ce dépôt est classiquement effectué dans des dispositifs appelés magnétron ou encore « pulvérisation magnétron », dans lesquels les couches successives, au sein de compartiments spécifiques, sont déposées sur le substrat maintenu en mouvement sur des rouleaux de convoyage. Selon des techniques aujourd'hui bien connues et maitrisées, le dépôt du matériau constituant une couche de l'empilement est obtenu par pulvérisation d'une cible dudit matériau ou d'un précurseur dudit matériau (constituant la cathode) sous l'effet des particules positives crées dans un plasma d'un gaz dit de pulvérisation. Les sources de pulvérisation sont habituellement des magnétrons qui utilisent des champs forts électriques et magnétiques.

Le dépôt d'un empilement sur l'autre face du substrat comprend les étapes de retournement de celui-ci et de dépôt dans un autre dispositif d'un empilement. Dans le cas particulier d'empilements identiques sur les deux faces (cas des revêtements antireflets), on pourra avantageusement utiliser par exemple le même dispositif pour le dépôt des deux couches.

Lorsque le substrat est disposé horizontalement dans le dispositif de dépôt, (souvent appelé dans le métier « coater horizontal »), le dépôt d'empilements sur les deux faces d'un même substrat s'est avéré cependant problématique. Si, après nettoyage, aucune trace de marques, notamment sous la forme de rayures ou autre altération visible du premier empilement n'est détecté sur le vitrage en sortie du dispositif de dépôt, des défauts sous la forme de marques rectilignes sont pourtant apparus sur le vitrage final, c'est-à-dire après que celui-ci ait subi un traitement thermique, notamment sous la forme d'une trempe ou encore d'un bombage.

En raison de l'absence de ces mêmes traces sur les empilements déposés en sortie du dispositif de dépôt magnétron avant le traitement thermique, ainsi que de toute trace de détérioration de l'empilement telles que des fissures, on a tout d'abord pensé à un problème directement lié au traitement thermique subi par les couches. Cependant, même en faisant varier les conditions du traitement thermique dans le sens d'une diminution de la température et/ou de la durée du traitement, il n'a pas été possible de supprimer l'apparition de ces marques.

Les inventeurs ont cependant établi un lien entre les marques observées sur le vitrage final et le poids du substrat de verre. En particulier, il est apparu que les marques apparues après le traitement thermique étaient d'autant plus prononcées que le verre utilisé présentait une grande épaisseur. En particulier, les marques sont apparues systématiquement sur les produits trempés pour des épaisseurs de verre supérieures à 3 mm, notamment de l'ordre de 6 à 20 mm.

Bien que les deux faces du vitrage après le dépôt des deux empilements apparaissent visuellement sensiblement identiques, les inventeurs ont relié le phénomène d'apparition des marques après le traitement thermique au contact entre les rouleaux des moyens de convoyage et les substrats déjà revêtus sur une première face du premier empilement. En particulier, sans que cela puisse être considéré comme une interprétation définitive, une explication possible à l'apparition des marques pourrait être le poids du substrat qui vient appuyer sur la couche déposée sur la première face, et qui se retrouve au contact des rouleaux permettant le défilement du substrat dans le dispositif, pour les besoins du dépôt du deuxième empilement. Une telle explication apparaît cependant étonnante au regard de l'absence de marques caractéristiques sur la face du vitrage muni du premier empilement en sortie du dispositif de dépôt, ces marques distinctives n'apparaissant visuellement sur ladite première face qu'après le traitement thermique.

On connaît de l'art, par exemple de la demande de brevet WO03/065081, des couches de protection d'empilements sur des substrats transparents, consistant à déposer une couche de carbone temporaire sur ledit empilement. Cette couche de protection a pour but d'empêcher la rayure ou la dégradation chimique (notamment l'oxydation) de certaines couches de l'empilement, notamment les couches métalliques d'argent. Le problème technique traité dans cette demande est très différent de celui résolu par la présente invention. Dans la publication WO03/065081, il s'agit de protéger un simple empilement de couches contre la rayure lors de sa manipulation et son transport et non d'éviter l'apparition de marques sur une face du substrat lorsque celui-ci doit être recouvert sur ses deux faces d'empilements, dans un dispositif du type « coater horizontal ». En outre, comme expliqué précédemment, aucune trace de rayures n'apparaissant visuellement sur le substrat en sortie du dispositif de dépôt, l'enseignement de cette demande n'apparait à première vue d'aucune utilité pour résoudre le problème selon l'invention consistant en l'apparition de marques après un traitement thermique. US-A-2003118860 divulgue un procédé de dépôt de couches minces à deux faces sur un substrat verrier renonçant explicitement à une couche en carbone. La présente invention se rapporte à un procédé de dépôt de revêtements, de préférence constitués d'empilement de couches minces, sur les deux faces d'un substrat verrier, comprenant les étapes suivantes :
- dans un premier dispositif de dépôt, dépôt sur une première face du substrat d'un premier revêtement,
- dépôt sur ledit premier revêtement d'une couche de protection temporaire, au sein dudit premier dispositif,
- retournement dudit substrat, de telle façon que la face revêtue du revêtement et de la couche de protection se retrouvent au contact de moyens de convoyage vers un second dispositif de dépôt,
- dans le second dispositif de dépôt dans lequel le substrat se déplace sur lesdits moyens de convoyage, dépôt sur la deuxième face d'un second revêtement, identique ou différent du premier revêtement,
- éventuellement dépôt sur ledit second revêtement d'une couche de protection temporaire, de préférence au sein dudit second dispositif,
dans lequel le premier et le deuxième dispositif sont des dispositifs de pulvérisation magnétron et dans lequel la couche de protection temporaire est une couche comprenant du carbone. Selon des modes préférés de réalisation du procédé de dépôt selon l'invention, qui peuvent être combinés entre eux le cas échéant :
- Le premier et/ou le deuxième revêtements sont des empilements de couches minces d'épaisseur inférieure à 1 micromètre.
- La couche de protection temporaire est une couche de carbone, notamment amorphe, d'épaisseur comprise entre 1 et 50 nm, de préférence d'épaisseur comprise entre 1 et 10 nm. La couche de protection temporaire peut être avantageusement déposée, par pulvérisation d'une cible en carbone dans une atmosphère inerte en particulier d'Argon, de préférence dans ledit premier dispositif.
- Lesdits revêtements sont des empilements comprenant des couches d'oxydes, de nitrures ou d'oxynitrures notamment d'au moins un élément choisi parmi le zinc, le niobium, le bismuth, l'étain, le silicium, l'aluminium, le titane, le zirconium, comprenant éventuellement une ou plusieurs couches métalliques.
- Au moins un desdits revêtements (de préférence les deux revêtements) sont des empilements à propriétés antireflets sur la surface de chaque face du substrat.
- Le substrat est une feuille de verre d'épaisseur comprise entre 3 et 20 mm, de préférence une épaisseur comprise entre 6 et 20 mm, et de manière très préférée une épaisseur comprise entre 8 et 20 mm.
La présente invention concerne également un procédé de production d'un vitrage comprenant un substrat revêtu sur ses deux faces d'un revêtement de préférence constitué par un empilement de couches, dans lequel :
- on met en oeuvre un procédé de dépôt selon le procédé de dépôt décrit précédemment, pour l'obtention d'un vitrage comprenant au moins un substrat comprenant sur chacune de ses faces un revêtement, ledit substrat comprend en outre sur au moins une de ses faces une couche de protection temporaire, au-dessus d'un revêtement,
- on soumet le vitrage ainsi obtenu à un traitement d'élimination de la couche temporaire.

De préférence, l'élimination de la couche temporaire est obtenue par chauffage, par un traitement de surface comprenant notamment la mise en oeuvre d'un rayonnement laser, d'un plasma, d'un faisceau ionique ou encore sous l'effet d'agents chimiques. En particulier, ledit traitement d'élimination peut être avantageusement réalisé par le traitement thermique consistant en une trempe ou un bombage dudit vitrage. Un vitrage peut être obtenu par un procédé de dépôt tel que décrit précédemment, comprenant au moins un substrat comprenant sur chacune de ses faces un empilement de couches minces, caractérisé en ce que ledit substrat comprend en outre sur au moins une de ses faces, au-dessus de l'empilement présent sur ladite face, une couche de protection temporaire. Un vitrage peut être obtenu par un procédé de production tel que décrit précédemment, comprenant au moins un substrat comprenant sur chacune de ses faces un empilement de couches minces, le vitrage se caractérisant en ce que chaque empilement est dépourvu de marques visibles à sa surface.

Les vitrages décrits précédemment peuvent répondre en outre aux réalisations suivantes :
- Le premier et/ou le deuxième revêtements sont des empilements de couches minces d'épaisseur inférieure à 1 micromètre.
- Le substrat est une feuille de verre d'épaisseur comprise entre 3 et 20 mm, de préférence une épaisseur comprise entre 6 et 20 mm, et de manière très préférée une épaisseur comprise entre 8 et 20 mm.
- Lesdits revêtements sont des empilements comprenant des couches d'oxydes, de nitrures ou d'oxynitrures notamment d'au moins un élément choisi parmi le zinc, le niobium, le bismuth, l'étain, le silicium, l'aluminium, le titane, le zirconium, comprenant éventuellement une ou plusieurs couches métalliques.
- Au moins un desdits revêtements (de préférence les deux revêtements) sont des empilements à propriétés antireflets sur la surface de chaque face du substrat.

Au sens de la présente invention, on entend normalement par « empilement », et de manière classique et générale, une succession d'au moins deux couches. Même si généralement dans les vitrages actuels, la fonctionnalité recherchée est assurée par le dépôt d'une pluralité de couches minces sous la forme d'un empilement, la présente invention n'exclut cependant pas le cas où au moins un des revêtements ne serait constitué que d'une couche unique déposée à la surface du substrat, notamment sous la forme d'un email ou d'une peinture.

Par couche mince on entend une couche présentant une épaisseur inférieure à 1 micromètre et le plus souvent comprise entre quelques nanomètres et quelques dizaines de nanomètres, habituellement obtenue par un procédé de dépôt sous vide, notamment du type pulvérisation magnétron.

Au sens de la présente invention, un revêtement ou un empilement peut ne couvrir que partiellement la surface du substrat verrier.

Au sens de la présente invention, on entend par couche de protection temporaire une couche supplémentaire déposée au-dessus du revêtement (de l'empilement) recherché et qui est provisoire dans le temps. On entend par provisoire, le fait que cette couche supplémentaire peut être facilement éliminée dans une étape ultérieure à la fabrication de l'empilement et au dépôt de ladite couche, de préférence sous l'effet de la chaleur, ou encore par un traitement de surface du type « etching », en particulier par mise en oeuvre d'un rayonnement du type laser, d'un plasma, d'un faisceau ionique ou encore sous l'effet d'agents chimiques. De préférence l'élimination est obtenue sous l'effet de la chaleur, par un traitement thermique.

Cette étape d'élimination peut selon l'invention être dédiée à cette opération ou préférentiellement faire partie du procédé global de mise en oeuvre du vitrage final. En particulier, dans ce dernier cas, de façon privilégiée, l'étape d'élimination est réalisée au cours de la trempe ou du bombage du vitrage revêtu.

Idéalement, l'élimination n'affecte toutefois pas les propriétés du revêtement protégé ou d'une manière limitée, et dans tous les cas d'une manière facilement corrigeable notamment par modification des paramètres initiaux du traitement thermique de trempe ou de bombage ou encore par des adaptations minimes de la constitution du revêtement initial (notamment de l'empilement de couches) pour compenser les faibles variations induites par la couche de protection.

Pour illustrer plus en détails la présente invention, on donne ci-après, à l'aide de la figure ci-jointe, un exemple de sa mise en oeuvre, sans bien entendu que celui-ci puisse être considéré comme limitant la portée de l'invention.

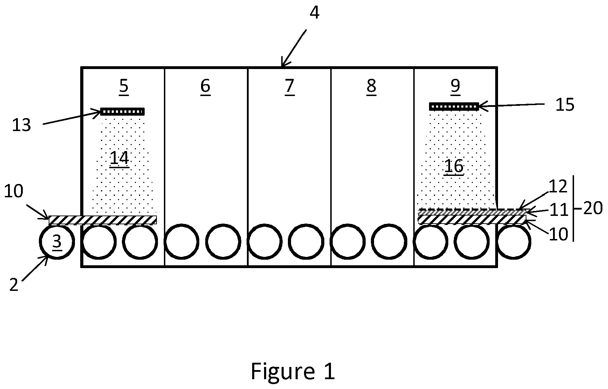

Sur la figure 1, on a représenté schématiquement un substrat en verre 10 transporté par des moyens de convoyage 2 comportant une pluralité de rouleaux 3 dans un dispositif de dépôt d'empilement de couches du type pulvérisation magnétron 4. Le dispositif se compose de plusieurs compartiments 5, 6, 7, 8, au sein desquels sont déposées par pulvérisation magnétron les couches successives de l'empilement dont l'épaisseur varie de quelques nanomètres à quelques dizaines de nanomètres, selon des techniques bien connues de l'art. A titre d'illustration, on a représenté schématiquement sur la figure 1 une première cible 13, à partir de laquelle sont déposées les particules 14 de la matière pulvérisée à partir de la cible sur le substrat verrier 10. Sur la figure 1, on a représenté uniquement quatre compartiments 5 à 8 mais il est bien entendu que le dispositif 4 comprend le nombre de compartiments nécessaires pour le dépôt de l'empilement souhaité. Par exemple, l'empilement peut être un empilement à quatre couches alternant les couches de plus haut et de plus bas indices de réfraction. Dans un compartiment supplémentaire et terminal 9, on dispose selon l'invention une cible en carbone 15 que l'on pulvérise selon les techniques bien connues décrites précédemment, le carbone sous forme de particules nanométrique 16 se déposant sur l'empilement 11 de couches formé dans les compartiments précédents du dispositif. On obtient ainsi en sortie du dispositif un vitrage intermédiaire 20 comprenant un substrat 10 revêtu sur une seule face de l'empilement antireflet désiré 11 et d'une couche de protection provisoire 12 de carbone amorphe. Cette couche de carbone est très fine, par exemple d'épaisseur comprise entre 1 et 10 nanomètres. Son épaisseur est normalement ajustée en fonction de l'épaisseur du substrat de verre.

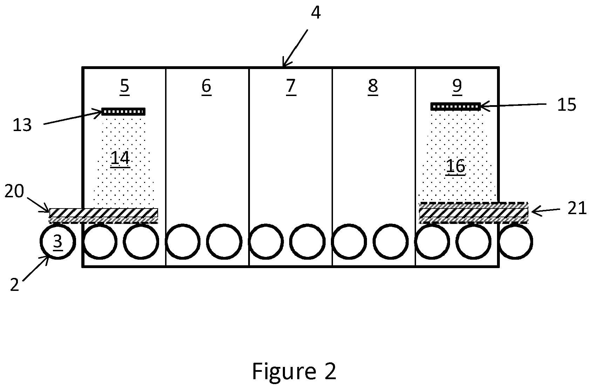

Sur la figure 2 on a représenté le vitrage 20 en entrée du même dispositif 4, après que celui ait été retourné par des moyens robotisés appropriés, de telle façon que la couche de protection provisoire 11 se retrouve au contact des rouleaux 3. Un deuxième empilement identique au précédent est alors déposé dans les compartiments 5 à 8 de façon à obtenir un vitrage constitué d'un substrat revêtu sur ces deux faces d'un empilement antireflet. Selon un premier mode de réalisation (qui ne correspond pas à celui décrit sur la figure 2), le compartiment magnétron 9 comprenant la cible de carbone est désactivé. On obtient selon ce mode et plus généralement selon l'invention un vitrage comprenant une seule couche de carbone sur le premier empilement. Selon une autre réalisation possible et tel que décrit sur la figure 2, le compartiment magnétron 9 comprenant la cible de carbone 15 est maintenu activé lors du deuxième passage. On obtient selon ce mode et plus généralement selon l'invention un vitrage 21 comprenant une couche de carbone sur chaque face, au-dessus de chaque empilement.

Le vitrage peut ensuite être mis en réserve, stocké puis transporté et livré vers un lieu de transformation où il pourra notamment être trempé, bombé ou encore subir un autre traitement thermique, étape au cours de laquelle la couche temporaire de carbone est éliminée.

Dans l'exemple qui précède, l'élimination de la couche de carbone temporaire est obtenue lors d'un procédé thermique pratiqué sur le vitrage pour sa bonne mise en oeuvre tel qu'un bombage ou une trempe. Sans sortir du cadre de la présente invention, on peut néanmoins envisager d'autres modes d'élimination spécifiques de la couche tel qu'un traitement laser, une élimination par rayonnement laser, par faisceau plasma ou ionique ou encore par des composés chimiques, ces dernières solutions étant cependant non préférés selon l'invention.

Les détails et caractéristiques avantageuses de l'invention sont plus particulièrement détaillés ci-après, dans les exemples qui suivent.

Tous les exemples qui suivent concernent des empilements antireflets à quatre couches. Les couches ont toutes été déposées selon les techniques conventionnelles et bien connues de pulvérisation cathodique d'une cible, assistée par champ magnétique et réactive sans qu'il soit besoin de décrire plus en détail cette technique bien connue comme indiqué précédemment. Les différentes couches ont été obtenues en continu dans une même installation conforme à celle décrite schématiquement sur les figures 1 et 2 et munie de compartiments dédiés au dépôt de chacune des couches constituant l'empilement.

Plus précisément, le dépôt des couches de SiO₂ a été obtenu de manière classique en atmosphère oxydante faite d'un mélange Ar/O₂ et à partir de la pulvérisation de cibles en Si métallique. Les cibles en Si utilisées contenaient de l'Aluminium métallique (8% poids), notamment afin de les rendre plus conductrices.

Le dépôt des couches d'oxyde mixte de zinc et d'étain a été obtenu en atmosphère oxydante faite d'un mélange Ar/O₂ et par pulvérisation de cibles métalliques comprenant un mélange de zinc et d'étain sous forme métallique, la composition du mélange constituant la cible étant adaptée à l'obtention d'un rapport massique Sn/Zn égale à environ 60/40 dans les couches SnₓZn_{y}O finalement obtenue dans l'empilement antireflet.

La composition des couches et notamment le rapport Sn/Zn a été mesuré par les techniques classiques de microsonde de castaing (également appelée en anglais Electron Probe Microanalyser ou EPMA).

### Exemple 1 (comparatif) :

Sur les deux faces d'un substrat verrier, on dépose selon les techniques de pulvérisation magnétron classique et comme indiqué précédemment un même empilement antireflet à quatre couches interférentielles.

Le verre est un verre clair silico-sodo-calcique de 4 mm d'épaisseur, commercialisé sous le nom de Planilux par Saint-Gobain Vitrage. L'empilement déposé est présent sur les deux faces du support verrier et est constitué par les couches suivantes, à partir de la surface du verre :
1 : SnₓZn_{y}O_{z} d'épaisseur 20 nm,
   (rapport massique Sn/Zn d'environ 60/40, tel que mesuré en microsonde)
2 : SiO₂ d'épaisseur 30 nm,
3 : SnₓZn_{y}O_{z} d'épaisseur 110 nm,
   (rapport massique Sn/Zn d'environ 60/40, tel que mesuré en microsonde)
4 : SiO₂ d'épaisseur 90 nm.

La première couche 1 est dite à haut indice. Cette première couche 1 est un oxyde mixte de zinc et d'étain de formule générale SnₓZn_{y}O_{z}, dans lequel le rapport massique Sn/Zn est de l'ordre de 60/40. Son épaisseur est de l'ordre de 20 nm. L'indice de réfraction de cette couche est proche de 2,0 à 550 nm. Elle est déposée dans le premier compartiment 5 sur la figure 1. Dans le compartiment suivant 6 et sur cette première couche 1, une couche 2 de SiO₂ d'indice de réfraction d'environ 1,48 est déposée, selon le procédé décrit précédemment, puis dans le compartiment 7 une troisième couche 3 d'oxyde mixte SnₓZn_{y}O_{z}, sensiblement identique en composition à la précédente, c'est-à-dire obtenue à partir de la même cible métallique, mais d'épaisseur égale à 110 nm. Une quatrième couche de SiO₂ complète l'empilement.

Le procédé de dépôt des empilements sur les deux faces est celui décrit précédemment à l'aide des figures 1 et 2, mais le compartiment 9 n'est pas activé selon cet exemple comparatif: un premier passage du substrat verrier est mis en oeuvre dans le dispositif 4 de dépôt par pulvérisation magnétron pour le dépôt du premier empilement sur une des faces selon les principes décrits précédemment, puis le substrat est retourné et réintroduit dans le même dispositif 4 pour le dépôt du deuxième empilement antireflet identique au premier sur la deuxième face. Après nettoyage du vitrage ainsi obtenu, constitué par le substrat verrier revêtu sur chacune de ses faces principales par le même empilement, aucun défaut majeur supplémentaire n'apparaît visuellement sur l'une des deux faces, comparée par rapport à l'autre.

Le vitrage est trempé selon les techniques classiques de l'art. La trempe est effectuée en chauffant le substrat à environ 685 °C pendant 200 s puis en le refroidissant brusquement.

Après trempe, le vitrage montre cette fois sur une de ses faces la présence visible de traces sous la forme de marques grossièrement rectilignes, sans que celles-ci puissent être assimilées à des rayures.

### Exemple 2 (selon l'invention) :

Cet exemple est identique au précédent, à la différence que cette fois le compartiment 9 est activé, de telle façon qu'une couche de carbone amorphe 12 est déposé sur le premier empilement 11, conformément à la présente invention.

Des analyses complémentaires, en particulier de diffraction de rayon X, montrent que la couche de protection provisoire est constituée essentiellement de carbone amorphe.

Le vitrage est ensuite trempé comme indiqué dans l'exemple précédent, ce traitement thermique ayant pour effet l'élimination de la totalité du carbone.

Contrairement au vitrage obtenu selon l'exemple 1, aucun défaut (notamment sous la forme des marques précédemment décrites) n'apparaît sur la face sur laquelle avait été déposé le premier empilement, après élimination de la couche de protection provisoire en carbone par le traitement de trempe.

Les propriétés optiques et de colorimétrie des vitrages obtenus selon les exemples 1 et 2, après trempe, ont été mesurées.

D'une manière générale, toutes les caractéristiques lumineuses présentées dans la présente description sont obtenues selon les principes et méthodes décrits dans la norme européenne (et française) EN 410 se rapportant à la détermination des caractéristiques lumineuses et solaires des vitrages utilisés dans le verre pour la construction. De manière conventionnelle, les indices de réfraction sont mesurés à une longueur d'onde de 550nm. Par R_{L} et T_{L}, on entend au sens de la présente description les réflexions coté couche et transmissions à incidence normale, sous l'illuminant D65 avec un champ de vision de 2°. Par (L*, a*, b*), on entend au sens de la présente invention les coordonnées de l'espace couleur sous l'illuminant D65 avec un champ de vision de 2° en réflexion côté couche.

Les résultats expérimentaux sont regroupés dans le tableau 1 qui suit :

**Tableau 1**

| | T_{L} (%) | R_{L} (%) | a* | b* |
|---|---|---|---|---|
| Exemple 1 | 97,2 | 0,95 | 3,6 | -11,0 |
| Exemple 2 | 97,1 | 0,93 | 3,5 | -11,3 |

Les résultats reportés dans le tableau ci-dessus démontrent l'effet antireflet de l'empilement présent à la surface du support verrier : alors que le verre nu présente une réflexion R_{L} supérieure à 8%, celle-ci est abaissée à 0,93 % lorsque l'empilement est déposé sur les deux faces.

On observe également que les propriétés antireflets du vitrage ne sont pas affectées par le dépôt puis l'élimination de la couche de protection provisoire en carbone.

## Revendications

1. Procédé de dépôt de revêtements, de préférence constitués d'empilement de couches minces, sur les deux faces d'un substrat verrier, comprenant les étapes suivantes :
- dans un premier dispositif de dépôt dans lequel le substrat est disposé horizontalement, dépôt sur une première face du substrat d'un premier revêtement,
- dépôt sur ledit premier revêtement d'une couche de protection temporaire au sein dudit premier dispositif,
- retournement dudit substrat, de telle façon que la face revêtue du revêtement et de la couche de protection se retrouvent au contact de moyens de convoyage vers un second dispositif de dépôt,
- dans ledit second dispositif de dépôt dans lequel le substrat se déplace horizontalement sur lesdits moyens de convoyage, dépôt sur la deuxième face d'un second revêtement, identique ou différent du premier revêtement,
- éventuellement dépôt sur ledit second revêtement d'une couche de protection temporaire, de préférence au sein dudit second dispositif,
dans lequel le premier et le deuxième dispositif sont des dispositifs de pulvérisation magnétron et dans lequel la couche de protection temporaire est une couche comprenant du carbone.

2. Procédé de dépôt selon la revendication 1, dans lequel le premier et/ou le deuxième revêtement sont des empilements de couches minces d'épaisseur inférieure à 1 micromètre.

3. Procédé de dépôt selon l'une des revendications précédentes, dans lequel la couche de protection temporaire est une couche de carbone, notamment amorphe, d'épaisseur comprise entre 1 et 50 nm, de préférence d'épaisseur comprise entre 1 et 10 nm.

4. Procédé de dépôt selon la revendication précédente, dans lequel la couche de protection temporaire est déposée, de préférence dans ledit premier dispositif, par pulvérisation d'une cible en carbone dans une atmosphère inerte en particulier d'Argon.

5. Procédé de dépôt selon l'une des revendications précédentes dans lequel lesdits revêtements sont des empilements comprenant des couches d'oxydes, de nitrures ou d'oxynitrures notamment d'au moins un élément choisi parmi le zinc, le niobium, le bismuth, l'étain, le silicium, l'aluminium, le titane, le zirconium, comprenant éventuellement une ou plusieurs couches métalliques.

6. Procédé de dépôt selon l'une des revendications précédentes dans lequel au moins un desdits revêtements, et de préférence les deux revêtements, sont des empilements à propriétés antireflets sur la surface de chaque face du substrat.

7. Procédé de dépôt selon l'une des revendications précédentes dans lequel le substrat est une feuille de verre d'épaisseur comprise entre 3 et 20 mm, de préférence une épaisseur comprise entre 6 et 20 mm, et de manière très préférée une épaisseur comprise entre 8 et 20 mm.

8. Procédé de production d'un vitrage comprenant un substrat revêtu sur ses deux faces d'un revêtement de préférence constitué par un empilement de couches, dans lequel :
- on met en oeuvre un procédé de dépôt selon l'une des revendications 1 à 7, pour l'obtention d'un vitrage comprenant au moins un substrat comprenant sur chacune de ses faces un revêtement, dans lequel ledit substrat comprend en outre sur au moins une de ses faces une couche de protection temporaire, au-dessus d'un revêtement,
- on soumet le vitrage ainsi obtenu à un traitement d'élimination de la couche temporaire.

9. Procédé de production d'un vitrage selon la revendication précédente, dans lequel l'élimination de la couche temporaire est obtenue par chauffage, par un traitement de surface comprenant notamment la mise en oeuvre d'un rayonnement laser, d'un plasma, d'un faisceau ionique ou encore sous l'effet d'agents chimiques.

10. Procédé de production d'un vitrage selon la revendication 8, dans lequel ledit traitement d'élimination est réalisé par le traitement thermique consistant en une trempe ou un bombage dudit vitrage.

## Patentansprüche

1. Verfahren zum Aufbringen von Beschichtungen, vorzugsweise gebildet von einem Stapel dünner Schichten, auf die zwei Seiten eines Glassubstrats, umfassend die folgenden Schritte:
- in einer ersten Aufbringvorrichtung, in welcher das Substrat horizontal angeordnet ist, Aufbringen einer ersten Beschichtung auf eine erste Seite des Substrats,
- Aufbringen, in der ersten Vorrichtung, einer vorübergehenden Schutzschicht auf die erste Beschichtung,
- Umdrehen des Substrats derart, dass sich die mit der Beschichtung und der Schutzschicht beschichtete Seite in Kontakt mit Fördermitteln zu einer zweiten Aufbringvorrichtung befindet,
- in der zweiten Aufbringvorrichtung, in welche sich das Substrat horizontal auf den Fördermitteln verlagert, Aufbringen einer zweiten Beschichtung, die mit der ersten Beschichtung identisch ist oder sich von ihr unterscheidet, auf die zweite Seite,
- eventuell Aufbringen, vorzugsweise in der zweiten Vorrichtung, einer vorübergehenden Schutzschicht auf die zweite Beschichtung,
wobei die erste und die zweite Vorrichtung Magnetron-Zerstäubungsvorrichtungen sind und, wobei die vorübergehende Schutzschicht eine Schicht ist, die Kohlenstoff umfasst.

2. Verfahren zum Aufbringen nach Anspruch 1, wobei die erste und/oder die zweite Beschichtung Stapel dünner Schichten mit einer Stärke von unter 1 Mikrometer sind.

3. Verfahren zum Aufbringen nach einem der vorangehenden Ansprüche, wobei die vorübergehende Schutzschicht eine insbesondere amorphe Kohlenstoffschicht mit einer Stärke zwischen 1 und 50 nm inklusive, vorzugsweise mit einer Stärke zwischen 1 und 10 nm inklusive, ist.

4. Verfahren zum Aufbringen nach dem vorangehenden Anspruch, wobei die vorübergehende Schutzschicht vorzugsweise in der ersten Vorrichtung durch Zerstäuben eines Kohlenstoff-Targets in einer inerten Atmosphäre speziell aus Argon aufgebracht wird.

5. Verfahren zum Aufbringen nach einem der vorangehenden Ansprüche, wobei die Beschichtungen Stapel sind, umfassend Oxid-, Nitrid- oder Oxinitridschichten insbesondere mindestens eines Elements, das aus dem Zink, dem Niobium, dem Wismut, dem Zinn, dem Silizium, dem Aluminium, dem Titan, dem Zirkonium ausgewählt ist, die eventuell eine oder mehrere Metallschichten umfassen.

6. Verfahren zum Aufbringen nach einem der vorangehenden Ansprüche, wobei mindestens eine der Beschichtungen und vorzugsweise die zwei Beschichtungen Stapel mit Antireflexeigenschaften auf der Oberfläche jeder Seite des Substrats sind.

7. Verfahren zum Aufbringen nach einem der vorangehenden Ansprüche, wobei das Substrat eine Glastafel mit einer Stärke zwischen 3 und 20 mm inklusive, vorzugsweise mit einer Stärke zwischen 6 und 20 mm inklusive und in sehr bevorzugter Weise mit einer Stärke zwischen 8 und 20 mm inklusive ist.

8. Verfahren zum Herstellen einer Verglasung, umfassend ein auf seinen beiden Seiten mit einer Beschichtung, vorzugsweise gebildet von einem Stapel von Schichten, beschichtetes Substrat, wobei:
- ein Verfahren zum Aufbringen nach einem der Ansprüche 1 bis 7 zum Erhalt einer Verglasung durchgeführt wird, die mindestens ein Substrat umfasst, das auf jeder seiner Seiten eine Beschichtung umfasst, wobei das Substrat ferner auf mindestens einer seiner Seiten eine vorübergehende Schutzschicht über einer Beschichtung umfasst,
- die derart erhaltene Verglasung einer Behandlung zum Entfernen der vorübergehenden Schicht unterzogen wird.

9. Verfahren zum Herstellen einer Verglasung nach dem vorangehenden Anspruch, wobei das Entfernen der vorübergehenden Schicht durch Erwärmen, durch eine Oberflächenbehandlung, die insbesondere die Durchführung einer Laser-, Plasma-, Ionenstrahlbestrahlung umfasst, oder auch unter der Wirkung chemischer Mittel erfolgt.

10. Verfahren zum Herstellen einer Verglasung nach Anspruch 8, wobei die Behandlung zum Entfernen durch die thermische Behandlung durchgeführt wird, die in einem Härten oder in einem Wölben der Verglasung besteht.

## Claims

1. A process for depositing coatings, preferably consisting of a stack of thin layers on both faces of a glass substrate, comprising the following steps:
- in a first deposition device, in which the substrate is arranged horizontally, depositing a first coating onto a first face of the substrate,
- depositing onto the first coating a temporary protective layer, within the first device,
- turning over the substrate in such a way that the face coated with the coating and the protective layer are in contact with conveying means for conveying to a second deposition device,
- in the second deposition device, in which the substrate moves horizontally on the conveying means, depositing a second coating, identical or different to the first coating, onto the second face,
- optionally depositing onto the second coating a temporary protective layer, preferably within the second device,
wherein the first and second devices are magnetron sputtering devices and wherein the temporary protective layer is a layer comprising carbon.

2. The deposition process according to claim 1, wherein the first and/or second coatings are stacks of thin layers of thickness less than 1 micrometre.

3. The deposition process according to any one of the preceding claims, wherein the temporary protective layer is a layer of carbon, in particular amorphous carbon, of thickness comprising between 1 and 50 nm, preferably of thickness comprising between 1 and 10 nm.

4. The deposition process according to the preceding claim, wherein the temporary protective layer is deposited, preferably in the first device, by sputtering of a carbon target in an inert atmosphere, in particular argon.

5. The deposition process according to any one of the preceding claims, wherein the coatings are stacks comprising layers of oxides, nitrides or oxynitrides, in particular of at least one element chosen from zinc, niobium, bismuth, tin, silicon, aluminium, titanium and zirconium, optionally comprising one or more metallic layers.

6. The deposition process according to any one of the preceding claims, wherein at least one of the coatings, and preferably both coatings, are stacks having anti-reflection properties on the surface of each face of the substrate.

7. The deposition process according to any one of the preceding claims, wherein the substrate is a sheet of glass of thickness comprising between 3 and 20 mm, preferably of thickness comprising between 6 and 20 mm, and particularly preferably of thickness comprising between 8 and 20 mm.

8. A process for producing a glass pane comprising a substrate coated on both faces thereof with a coating preferably consisting of a stack of layers, wherein:
- the deposition process is implemented according to any one of claims 1 to 7 to obtain a glass pane comprising at least one substrate having a coating on each of the faces thereof, wherein the substrate further comprises on at least one of the faces thereof a temporary protective layer on top of the coating,
- the glass pane thus obtained is then subjected to a treatment for removing the temporary layer.

9. The process for producing a glass pane according to the preceding claim, wherein the removal of the temporary layer is achieved by heating, by a surface treatment comprising in particular the use of laser radiation, plasma, an ion beam, or under the effect of chemical agents.

10. The process of producing a glass pane according to claim 8, wherein the removal treatment is carried out by thermal treatment consisting of a tempering or bending of the glass pane.
